# EUROPÄISCHE PATENTSCHRIFT

(11) **EP 2 454 134 B1**
(45) Veröffentlichungstag und Bekanntmachung des Hinweises auf die Patenterteilung: **04.03.2020**
(21) Anmeldenummer: 10732901.3
(22) Anmeldetag: 05.07.2010
(51) Int. Cl.: B60T 11/10, B60T 11/30, B60T 17/22, B62L 3/02

(54) **BAUGRUPPE BESTEHEND AUS EINEM DRUCKMITTELVORRATSBEHÄLTER UND EINEM MANUELL BETÄTIGBAREN HAUPTZYLINDER, INSBESONDERE FÜR EINE HYDRAULISCHE KRAFTRADBREMSANLAGE**
ASSEMBLY MADE OF A PRESSURE MEDIUM STORAGE TANK AND A MANUALLY ACTUATED MAIN CYLINDER, IN PARTICULAR FOR A HYDRAULIC MOTORCYCLE BRAKE SYSTEM
ENSEMBLE COMPRENANT UN RÉSERVOIR DE FLUIDE SOUS PRESSION ET UN MAÎTRE-CYLINDRE POUVANT ÊTRE COMMANDÉ MANUELLEMENT, EN PARTICULIER POUR UN SYSTÈME DE FREINAGE HYDRAULIQUE DE MOTOCYCLE

(30) Priorität: 16.07.2009 DE 102009027769; 16.09.2009 DE 102009029510; 27.05.2010 DE 102010029337
(43) Veröffentlichungstag der Anmeldung: 23.05.2012
(73) Patentinhaber: Continental Teves AG & Co. OHG, 60488 Frankfurt am Main (DE)
(72) Erfinder: SCHMITT, Stefan, A., 63867 Johannesberg (DE); TANDLER, Peter, 61476 Kronberg/Ts. (DE); KREBS, Werner, 65582 Hambach (DE); NEUMANN, Hans-Jürgen, 65428 Rüsselsheim (DE); SCHIEL, Christoph, 61231 Bad Nauheim (DE); SCHLICHT, Stephan, 64569 Nauheim (DE)
(86) Internationale Anmeldenummer: PCT/EP2010/059519
(87) Internationale Veröffentlichungsnummer: WO 2011/006784

(56) Entgegenhaltungen:
- DE-A1- 3 921 310
- GB-A- 2 400 896
- US-A- 4 062 774
- US-A- 4 103 492

## Beschreibung

Die Erfindung betrifft eine Baugruppe bestehend aus einem Druckmittelvorratsbehälter und einem manuell betätigbaren Hauptzylinder, insbesondere für eine hydraulische Kraftradbremsanlage gemäß dem Oberbegriff des Patentanspruchs 1.

Eine derartige Baugruppe ist beispielsweise aus DE 103 59 851 A1 bekannt.
An einer so genannten Handbremsarmatur bei Motorrädern kann ein besonderer physikalischer Effekt auftreten, welcher zu Lufteintrag in das hydraulische Bremssystem und damit in Folge zu einer verminderten Bremswirkung führt.

Der beobachtete Effekt zeigt bei hohen Beschleunigungen und Anregungsfrequenzen von über 300Hz ein Einmischen von Luftblasen in die Bremsflüssigkeit. Der Eintrag von Luftblasen aus dem Luftpolster über dem Flüssigkeitsspiegel findet im Druckmittelvorratsbehälter statt. Bei den genannten kritischen Beschleunigungen und Frequenzen kommt es nun zu dem besonderen physikalischen Effekt, dass diese Luftblasen, entgegen ihrer Auftriebskraft, auf den Grund des Druckmittelvorratsbehälters fallen und dort für den Zeitraum der vorliegenden Umgebungsbedingungen verbleiben.
Ein Teil der Luftblasen kann bei den bekannten Baugruppen durch die Druckmittelverbindung in den Hauptzylinder gelangen. Kommt es nun zu einer Bremsbetätigung, wird beim Lösevorgang der Bremse durch Umklappen einer Hauptzylinder-Dichtmanschette ein Teil der Luft in die Druckkammer des Hauptzylinder transportiert und führt dort bei den nachfolgenden Bremsungen zu einem erhöhten Hebelweg bzw. verminderter Bremswirkung.

Aus US 4 103 492 A ist eine andere Baugruppe mit einem einteilig mit dem Hauptzylinder ausgebildeten zylindrischen Behälter bekannt, dessen Innenraum in Querrichtung durch mehrere perforierten Platten vollständig durchtrennt ist, welche das Passieren von Luftblasen verhindern sollen. Die Effektivität, Effizienz und Herstellaufwand insbesondere bei größeren Behältern und nicht kreisrunden Querschnitten wird jedoch bei einem solchen System als verbesserungswürdig angesehen.

Daher ist es Aufgabe der Erfindung, die Nachteile der bekannten Baugruppe bestehend aus einem Druckmittelvorratsbehälter und einem manuell betätigbaren Hauptzylinder zu vermeiden.

Diese Aufgabe wird erfindungsgemäß dadurch gelöst, dass im Bereich der Druckmittelverbindung eine Schutzvorrichtung angeordnet ist, welche ein Eindringen von Luft in die Druckkammer verhindert sowie ein Herausdringen von Luft in Richtung Druckmittelvorratsbehälter erlaubt und ein Gehäuse aufweist, welches sich um die Druckmittelverbindung herum von dem Boden des Druckmittelvorratsbehälter in den Behälterinnenraum erstreckt, wobei in dem Gehäuse wenigstens eine vom Boden beabstandete Öffnung vorgesehen ist.
Hierdurch kann verhindert werden, dass sich der vorstehend genannte Effekt negativ auf das Bremssystem auswirkt, indem Luftblasen aus dem Druckmittelvorratsbehälter in den Hauptzylinder gelangen können. Gleichzeitig kann eine korrekte Entlüftung eines entleerten Bremssystems ermöglicht werden und eventuell aus dem Hydrauliksystem aufsteigende Luft kann während des Betriebes entweichen.

Das Gehäuse der Schutzvorrichtung ist vorzugsweise im Wesentlichen topfförmig mit einer zylindrischen Wand und einem Boden vorgesehen, wobei der Boden der Schutzvorrichtung wenigstens eine, in einem Winkel zum Boden des Druckmittelvorratsbehälters geneigte Fläche aufweist und die Öffnung zum Herausdringen von Luft in Richtung Druckmittelvorratsbehälter zwischen der zylindrischen Wand und dem Boden der Schutzvorrichtung vorgesehen ist.

Gemäß einer weiteren vorteilhaften Ausführungsform ist im Gehäuse der Schutzvorrichtung ein Gewebe vorgesehen, welches ein Durchdringen von Luftblasen verhindert, wobei das Gehäuse einen Bypass aufweist, welcher ein Herausdringen von Luft aus dem Hauptzylinder ermöglicht.

Vorzugsweise kann in der Wand des Gehäuses zusätzlich zu der Öffnung ein Sieb vorgesehen werden.

Gemäß einer weiteren vorteilhaften Ausführungsform ist vorgesehen, dass die zylindrische Wand im Bereich der Öffnung einen in Richtung Boden gerichteten, schrägen Fortsatz aufweist.

Eine weitere vorteilhafte Ausführungsform der Erfindung sieht vor, dass das Gehäuse der Schutzvorrichtung im Wesentlichen topfförmig mit einer zylindrischen Wand und einem Boden vorgesehen ist, wobei im Gehäuse ein Schwimmer angeordnet ist, welcher beim Nachsaugen von Druckmittel aus dem Druckmittelvorratsbehälter ein Ansaugen von Luftblasen verhindert und der ein Herausdringen von Luft aus dem Hauptzylinder ermöglicht.

Um die Luftblasenbildung zu verhindern, kann gemäß einer vorteilhaften Ausführungsform im Behälterinnenraum ein Metallschaum oder ein Metallschwamm vorgesehen sein. Der Metallschwamm oder der Metallschaum können sowie serienmäßig als auch nachträglich in den Druckmittelvorratsbehälter eingebracht werden.

Hierzu kann der Metallschaum oder der Metallschwamm im gesamten Behälterinnenraum vorgesehen sein, wobei im Bereich eines Füllstutzens ein Freiraum zum Einführen einer Befüllvorrichtung vorgesehen ist. Hierdurch kann der Metallschwamm bzw. der Metallschaum auch als Schwappschutz dienen.

Vorzugsweise weist der Metallschaum oder der Metallschwamm im Bereich der Druckmittelverbindung eine Entlüftungsöffnung auf.

Weitere Merkmale, Vorteile und Anwendungsmöglichkeiten der Erfindung gehen aus der nachfolgenden Beschreibung von Ausführungsbeispielen sowie anhand der Zeichnung hervor, welche Ausführungsformen zeigt. Dabei zeigt jeweils stark schematisiert:
- Figur 1: ein erstes Ausführungsbeispiel der erfindungsgemäßen Baugruppe im Schnitt;
- Figur 2: eine Schutzvorrichtung eines zweiten Ausführungsbeispiels;
- Figur 3: einen Schnitt entlang der Linie A-A der Schutzvorrichtung gemäß Fig. 2;

- Figur 4: ein drittes Ausführungsbeispiel der erfindungsgemäßen Baugruppe im Schnitt;
- Figur 5: einen Ausschnitt eines vierten Ausführungsbeispiels der erfindungsgemäßen Baugruppe im Schnitt;
- Figur 6: einen Ausschnitt eines fünften Ausführungsbeispiels der erfindungsgemäßen Baugruppe im Schnitt;
- Figur 7: einen Ausschnitt eines sechsten Ausführungsbeispiels der erfindungsgemäßen Baugruppe im Schnitt;
- Figur 8: den Ausschnitt gemäß Fig. 7 während eines Nachsaugevorganges;
- Figur 9: ein siebtes Ausführungsbeispiel der erfindungsgemäßen Baugruppe im Schnitt;
- Figur 10: ein achtes Ausführungsbeispiel der erfindungsgemäßen Baugruppe im Schnitt;
- Figur 11: ein neuntes Ausführungsbeispiel der erfindungsgemäßen Baugruppe im Schnitt und
- Figur 12: ein zehntes Ausführungsbeispiel der erfindungsgemäßen Baugruppe im Schnitt.

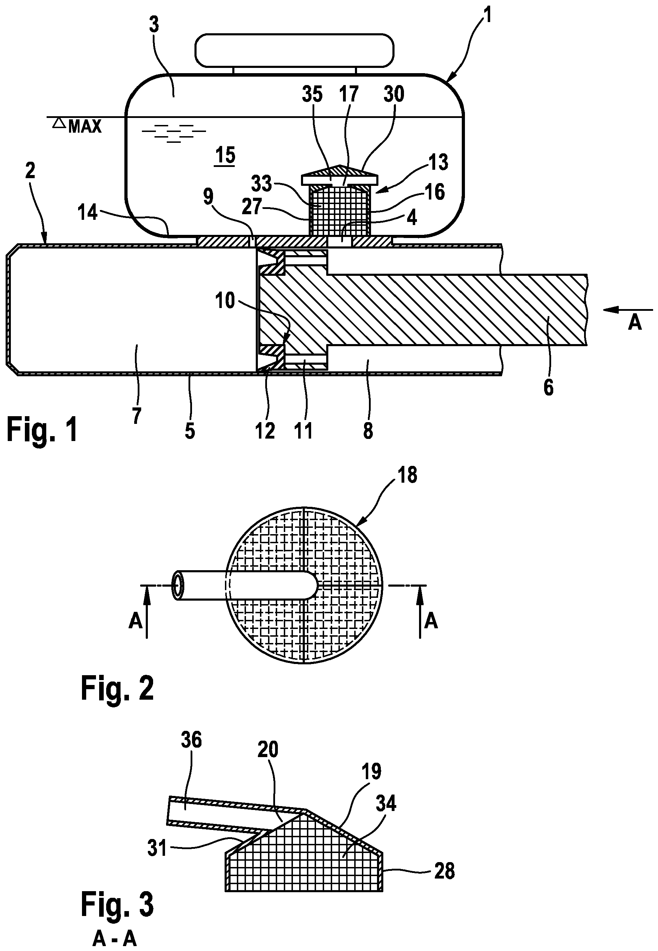

Fig. 1 bis 12 zeigen schematisch Ausführungsbeispiele einer erfindungsgemäßen Baugruppe bestehend aus einem Druckmittelvorratsbehälter 1 und einem manuell betätigbaren Hauptzylinder 2, insbesondere für eine hydraulische Kraftradbremsanlage, deren Aufbau und Funktion grundsätzlich bekannt sind.

An einer so genannten Handbremsarmatur bei Motorrädern kann ein besonderer physikalischer Effekt auftreten, welcher zu Lufteintrag in das hydraulische Bremssystem und damit in Folge zu einer verminderten Bremswirkung führt.

Dieser Effekt zeigt bei hohen Beschleunigungen und Anregungsfrequenzen von über 300Hz ein Einmischen von Luftblasen in das Druckmittel, d.h. in die Bremsflüssigkeit. In dem drucklosen Druckmittelvorratsbehälter 1 wird dem Bremssystem ein gesetzlich vorgeschriebenes Druckmittelvolumen bereitgestellt, wobei der Druckmittelvorratsbehälter 1 höchstens bis zur MAX-Marke befüllt wird, wie beispielsweise aus Fig. 1 ersichtlich ist.
Über dem Flüssigkeitsspiegel befindet sich daher ein Luftpolster 3, so dass bei den genannten kritischen Beschleunigungen und Frequenzen der Eintrag von Luftblasen aus dem Luftpolster 3 über dem Flüssigkeitsspiegel im Druckmittelvorratsbehälter 1 stattfindet und die Luftblasen, entgegen ihrer Auftriebskraft, auf den Grund des Druckmittelvorratsbehälters 1 fallen und dort für den Zeitraum der vorliegenden Umgebungsbedingungen verbleiben.

Wie aus Fig. 1 hervorgeht, welche eine erfindungsgemäße Baugruppe im Längsschnitt zeigt, sind der Druckmittelvorratsbehälter 1 und der Hauptzylinder 2 über wenigstens eine Druckmittelverbindung 4 dauerhaft verbunden.

Der Hauptzylinder 2 ist als so genannter Schnüffelloch-Hauptzylinder vorgesehen und umfasst einen in einem Gehäuse 5 infolge Bremsbetätigung verschiebbar angeordneten Kolben 6, welchem eine mit Radbremsen verbindbare Druckkammer 7 und eine Nachlaufkammer 8 zugeordnet ist.

In einem unbetätigten Zustand des Hauptzylinders 2 ist die Druckkammer 7 über eine Ausgleichsbohrung 9 mit sehr kleinem Durchmesser, dem so genannten Schnüffelloch, mit dem Druckmittelvorratsbehälter 1 verbunden. Bei Betätigung des Hauptzylinders 2 in Betätigungsrichtung A ist die Druckkammer 7 nach mittels einer auf dem Kolben 6 angeordneten Dichtmanschette 10 von dem Druckmittelvorratsbehälter 1 abgetrennt, sobald die Dichtmanschette 10 die Ausgleichsbohrung 9 überfahren hat. Die Nachlaufkammer 8 ist über eine im Gehäuse 5 ausgebildete Nachlaufbohrung, welche die Druckmittelverbindung 4 bildet, mit dem Druckmittelvorratsbehälter 1 dauerhaft verbunden.

Weiter weist der Kolben 6 axiale Ausgleichsbohrungen 11 auf, durch welche beim Lösen der Bremsbetätigung ein Nachsaugen von Druckmittel aus der Nachlaufkammer 8 in Richtung Druckkammer 7 erfolgt. Hierfür wird eine radial außen liegende, dynamisch beaufschlage Dichtlippe 12 der Dichtmanschette 10 nach innen gedrückt, so dass das Druckmittel die Dichtlippe 12 aus der Nachlaufkammer 8 in Richtung Druckkammer 7 überströmen kann.

Tritt der vorstehend beschriebene Effekt auf, kann ein Teil der Luftblasen bei bekannten Baugruppen über die Druckmittelverbindung 4, d.h. die Nachlaufbohrung zwischen Druckmittelvorratsbehälter 1 und Nachlaufkammer 8 in den Hauptzylinder 1 gelangen. Kommt es nun zu einer Bremsbetätigung, wird beim Lösevorgang der Bremse durch Umklappen der Dichtmanschette 10 ein Teil der Luft von der Nachlaufkammer 8 in die Druckkammer 7 des Hauptzylinder 1 transportiert und führt dort bei den nachfolgenden Bremsungen zu einem erhöhten Hebelweg bzw. verminderter Bremswirkung.

Um diese erheblichen Nachteile zu vermeiden, weist die erfindungsgemäße Baugruppe im Bereich der Druckmittelverbindung 4 eine Schutzvorrichtung 13,18,21,24,42 auf, welche ein Eindringen von Luft in die Druckkammer 7 bzw. bereits in die Nachlaufkammer 8 verhindert und ein Herausdringen von Luft in Richtung Druckmittelvorratsbehälter 1 erlaubt. Hierdurch kann verhindert werden, dass sich der vorstehend genannte Effekt negativ auf das Bremssystem auswirkt, indem Luftblasen aus dem Druckmittelvorratsbehälter 1 in den Hauptzylinder 2 gelangen können. Gleichzeitig kann eine korrekte Entlüftung eines entleerten Bremssystems ermöglicht werden und eventuell aus dem Hydrauliksystem aufsteigende Luft kann während des Betriebes entweichen.

Die Schutzvorrichtung 13,18,21,24,42 erstreckt sich von einem Boden 14 des Druckmittelvorratsbehälters 1 in einen Behälterinnenraum 15, so dass bei einem Nachsaugen von Druckmittel in Richtung Nachlaufkammer 8 keine Luftblasen die Druckmittelverbindung 4 passieren können. Hierzu kann die Schutzvorrichtung 13,18,21,24 beispielsweise an dem Boden 14 angeformt oder daran nachträglich befestigt sein. Eine angeformte Schutzvorrichtung hat dabei den Vorteil, dass keine zusätzlichen Montageschritte notwendig sind. Andererseits kann eine separat herzustellende Schutzvorrichtung 13 unter Umständen kostengünstiger bereit gestellt werden.

Den nachfolgend beschriebenen Schutzvorrichtungen 13,18,21,24 der Fig. 1 bis 8 ist gemein, dass sie jeweils ein Gehäuse 16,19,22,25 aufweisen, welches sich um die Druckmittelverbindung 4 herum von dem Boden 14 des Druckmittelvorratsbehälter 1 in den Behälterinnenraum 15 erstreckt, wobei in dem Gehäuse 16,19,22,25 wenigstens eine vom Boden 14 beabstandete Öffnung 17,20,23,26 vorgesehen ist, wobei die Beabstandung der Öffnung 17,20,23,26 vom Boden 14 den Vorteil hat, dass die auf den Boden 14 herabsinkenden Luftblasen nicht ohne weiteres in die Öffnung 17,20,23,26 hinein gesaugt werden können.

Damit die Luftblasen sich nicht auf der Schutzvorrichtung 13,18,21 sammeln und von dort in das Gehäuse 16,19,22 hineingesaugt werden können, ist das Gehäuse 16,19,22 gemäß den ersten fünf Ausführungsbeispielen, die in den Fig. 1 bis 6 gezeigt sind, im Wesentlichen topfförmig mit einer zylindrischen Wand 27,28,29 und einem Boden 30,31,32 vorgesehen, wobei der Boden 30,31,32 der Schutzvorrichtung 13,18,21 wenigstens eine, in einem Winkel zum Boden 14 des Druckmittelvorratsbehälters 1 geneigte Fläche aufweist und die Öffnung 17,20,23 zum Herausdringen von Luft in Richtung Druckmittelvorratsbehälter 1 zwischen der zylindrischen Wand 27,28,29 und dem Boden 30,31,32 der Schutzvorrichtung 13,18,21 vorgesehen ist. Die Öffnung 17,20,23 ist dabei derart angeordnet, dass sie von dem Boden 30,31,32 in vertikaler Richtung überdeckt wird, so dass herabsinkende Luftblasen nicht direkt in die Öffnung 17,20,23 fallen können.

Die beiden ersten Ausführungsbeispiele gemäß den Fig. 1 bis 3 weisen zusätzlich im Gehäuse 16,19 der Schutzvorrichtung 13,18 ein Gewebe 33,34 auf, welches ein Durchdringen von Luftblasen verhindert, wobei das Gehäuse 16,19 einen nur teilweise dargestellten Bypass 35,36 aufweist, welcher ein Herausdringen von Luft aus dem Hauptzylinder 2 in Richtung Druckmittelvorratsbehälter 1 ermöglicht. Die Maschenweite des Gewebes 33,34 ist derart gewählt, dass keine Luftblasen, die aufgrund des beschriebenen physikalischen Effektes auf den Boden 14 des Druckmittelvorratsbehälters 1 gefallen sind, den Schutzmechanismus durchdringen.
Die Filterfläche entspricht mindestens dem erforderlichen Durchfluss aus Hauptzylindervolumen und dem zulässigen Strömungswiderstand bei Tieftemperatur.

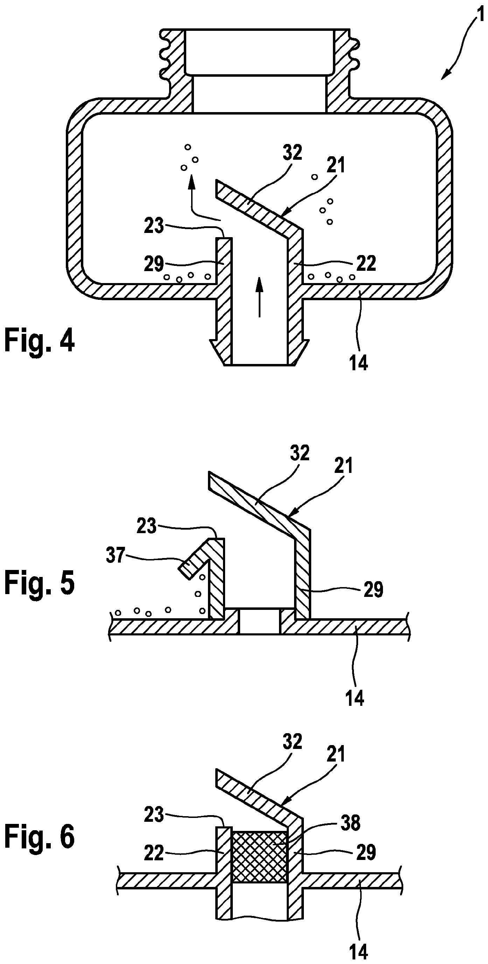

Das vierte Ausführungsbeispiel gemäß Fig. 5 unterscheidet sich zum dritten Ausführungsbeispiel gemäß Fig. 4 darin, dass die zylindrische Wand 29 im Bereich der Öffnung 23 einen in Richtung Boden 14 gerichteten, schrägen Fortsatz 37 aufweist, welcher auch bei einem starken Nachsaugen von Druckmittel ein Hineinsaugen von Luftblasen in die Öffnung 23 verhindert.

Aus Fig. 6 ist ersichtlich, dass gemäß dem fünften Ausführungsbeispiel in der Wand 29 des Gehäuses 22 zusätzlich zu der Öffnung 23 ein Sieb 38 vorgesehen ist. Dieses kann vorteilhafterweise bei der Herstellung mitgespritzt werden oder aber auch als Nachrüstteil vorgehen sein. Eine Siebfläche sollte im Verhältnis zur seitlichen Öffnung 23 so gewählt wird, dass beim Nachsaugen das Druckmittel nur über die Siebfläche angesaugt wird und beim Entlüften die aufsteigenden Luftblasen ungehindert über die Öffnung austreten können.

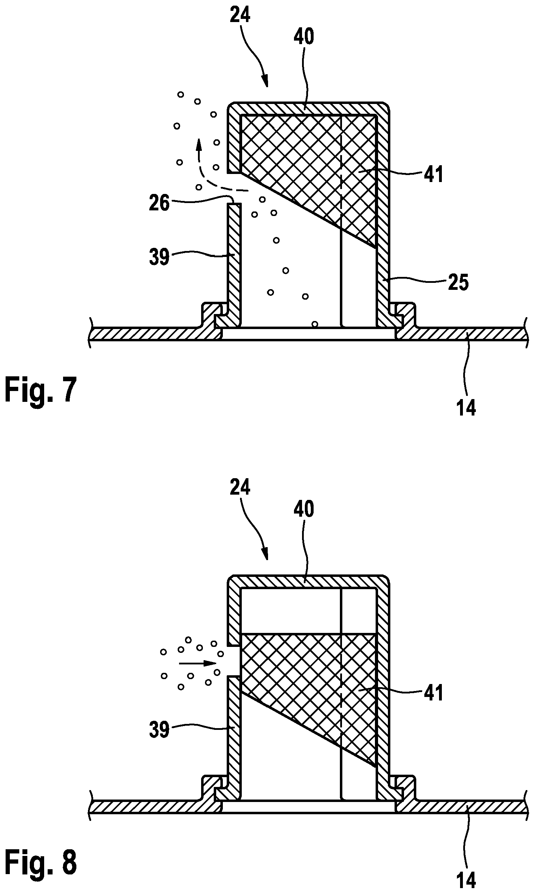

Den Fig. 7 und 8 ist die Schutzvorrichtung 24 des sechsten Ausführungsbeispiels in zwei unterschiedlichen Betriebszuständen der Baugruppe zu entnehmen. Das Gehäuse 25 der Schutzvorrichtung 24 ist im Wesentlichen topfförmig mit einer zylindrischen Wand 39 und einem Boden 40 vorgesehen, wobei im Gehäuse 25 ein Schwimmer 41 geführt angeordnet ist, welcher beim Nachsaugen von Druckmittel aus dem Druckmittelvorratsbehälter 1 ein Ansaugen von Luftblasen dadurch verhindert, dass er bei einem Nachsaugen nach unten in den Bereich der Öffnung 26 angesaugt wird und dadurch die Öffnung 26 verschließt, wie Fig. 8 zeigt. Aus Fig. 7 ist erkennbar, dass der Schwimmer 41 anderenfalls nach oben in Richtung Boden 40 aufsteigt und damit ein Herausdringen von Luft aus dem Hauptzylinder 1 ermöglicht.

Die vorstehend beschriebenen Ausführungsbeispiele können im Rahmen der Erfindung alle so ausgestaltet werden, dass die Schutzvorrichtungen 13,18,21,24 nachträglich in den Druckmittelvorratsbehälter 1 eingebracht werden kann, d.h. die Schutzvorrichtungen 13,18,21,24 sind somit nachrüstbar.

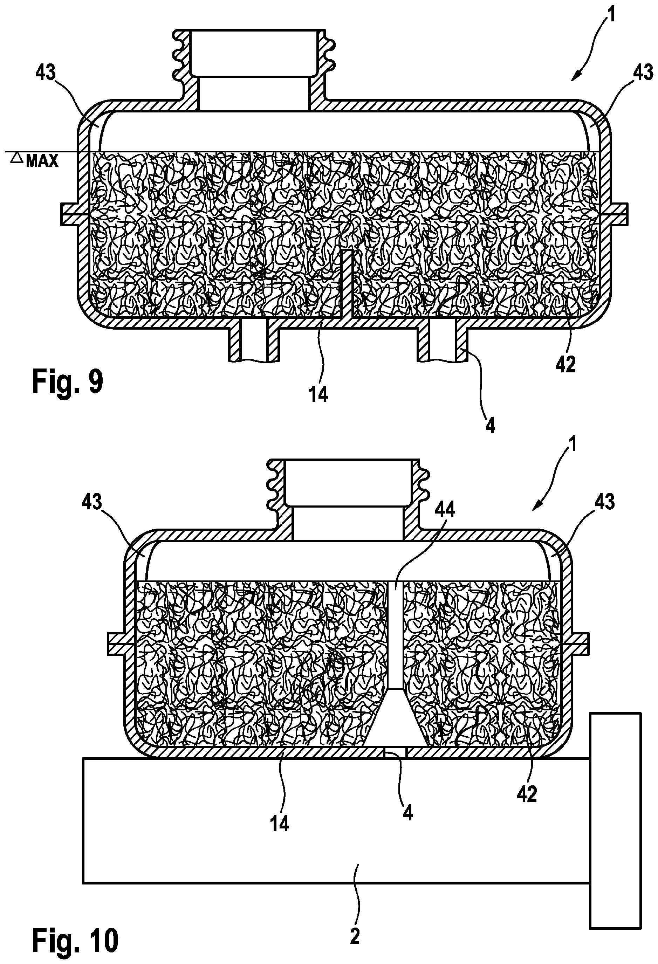

Den Fig. 9 bis 12 sind vier weitere Ausführungsbeispiele von erfindungsgemäßen Baugruppen zu entnehmen, bei welchen im Behälterinnenraum 15 des Druckmittelvorratsbehälters 1 ein Metallschaum oder ein Metallschwamm 42 als Schutzvorrichtung vorgesehen ist, der das Entstehen der Luftblasen bei den beschriebenen kritischen Bedingungen verhindert. Der Vorteil von Metallschaum oder Metallschwämmen 42 ist, dass diese in beliebiger Form hergestellt werden können und somit serienmäßig oder auch nachträglich in den Druckmittelvorratsbehälter 1 eingebracht werden können. Beispielsweise kann Edelstahlwolle als Metallschwamm eingesetzt werden.

Wie Fig. 9 zu entnehmen ist, ist bei diesem Ausführungsbeispiel der Metallschwamm 42 bis zur MAX-Marke vorgesehen und wird durch Niederhalter 43 am Boden 14 gehalten.

Das in Fig. 10 gezeigte achte Ausführungsbeispiel sieht im Unterschied zum Ausführungsbeispiel gemäß Fig. 9 vor, dass der Metallschaum oder der Metallschwamm 42 im Bereich der Druckmittelverbindung 4 eine Entlüftungsöffnung 44 aufweist, so dass die Luft ungehindert vom Hauptzylinder 2 in den Druckmittelvorratsbehälter 1 entweichen kann.

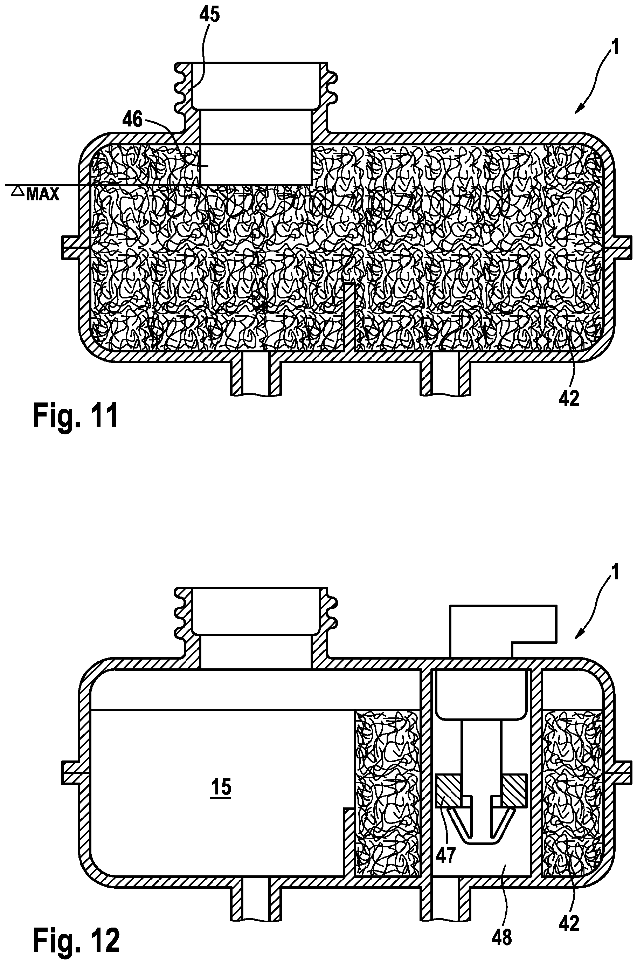

Das neunte Ausführungsbeispiel gemäß Fig. 11 zeigt einen Metallschwamm 42, welcher im gesamten Behälterinnenraum 15 vorgesehen ist. Lediglich im Bereich eines Füllstutzens 45 weist der Metallschwamm 42 einen Freiraum 46 zum Einführen einer Befüllvorrichtung auf.

Ein zusätzlicher Vorteil ergibt sich bei dem Einsatz des Metallschwammes 42 dadurch, dass dieser auch als Schwappschutz dient. Ferner kann der Metallschwamm 42 gemäß Fig. 12 auch nur einen Teilbereich des Behälterinnenraumes 15 ausfüllen. Wenn der Metallschwamm 42 eine Schwimmerkammer 48, in welcher ein Schwimmer 47 als Teil einer Behälterwarnvorrichtung angeordnet ist, umgibt, dient dieser zusätzlich als mechanisches Dämpfungs- bzw. Zeitglied.

### Bezugszeichenliste

- 1: Druckmittelvorratsbehälter
- 2: Hauptzylinder
- 3: Luftpolster
- 4: Druckmittelverbindung
- 5: Gehäuse
- 6: Kolben
- 7: Druckkammer
- 8: Nachlaufkammer
- 9: Ausgleichsbohrung
- 10: Dichtmanschette
- 11: Ausgleichsbohrung
- 12: Dichtlippe
- 13: Schutzvorrichtung
- 14: Boden
- 15: Behälterinnenraum
- 16: Gehäuse
- 17: Öffnung
- 18: Schutzvorrichtung
- 19: Gehäuse
- 20: Öffnung
- 21: Schutzvorrichtung
- 22: Gehäuse
- 23: Öffnung
- 24: Schutzvorrichtung
- 25: Gehäuse
- 26: Öffnung
- 27: Wand
- 28: Wand
- 29: Wand
- 30: Boden
- 31: Boden
- 32: Boden
- 33: Gewebe
- 34: Gewebe
- 35: Bypass
- 36: Bypass
- 37: Fortsatz
- 38: Sieb
- 39: Wand
- 40: Boden
- 41: Schwimmer
- 42: Metallschaum/Metallschwamm
- 43: Niederhalter
- 44: Entlüftungsöffnung
- 45: Füllstutzen
- 46: Freiraum
- 47: Schwimmer
- 48: Schwimmerkammer

- A: Betätigungsrichtung

## Patentansprüche

1. Baugruppe bestehend aus einem Druckmittelvorratsbehälter (1) und einem manuell betätigbaren Hauptzylinder (2), insbesondere für eine hydraulische Kraftradbremsanlage, wobei der Druckmittelvorratsbehälter (1) über wenigstens eine Druckmittelverbindung (4) dauerhaft mit dem Hauptzylinder (2) verbunden ist, wobei der Hauptzylinder (2) wenigstens eine mit Radbremsen verbindbare Druckkammer (7) aufweist **und** im Bereich der Druckmittelverbindung (4) eine Schutzvorrichtung (13,18,21,24,42) angeordnet ist, welche ein Eindringen von Luft in die Druckkammer (7) verhindert und ein Herausdringen von Luft in Richtung Druckmittelvorratsbehälter (1) erlaubt, **dadurch gekennzeichnet, dass** die Schutzvorrichtung (13,18,21,24) ein Gehäuse (16,19,22,25) aufweist, welches sich um die Druckmittelverbindung (4) herum von einem Boden (14) des Druckmittelvorratsbehälters (1) in den Behälterinnenraum (15) erstreckt, wobei in dem Gehäuse (16,19,22,25) wenigstens eine vom Boden (14) beabstandete Öffnung (17,20,23,26) vorgesehen ist.

2. Baugruppe nach Anspruch 1, **dadurch gekennzeichnet, dass** das Gehäuse (16,19,22) der Schutzvorrichtung (13,18,21) im Wesentlichen topfförmig mit einer zylindrischen Wand (27,28,29) und einem Boden (30,31,32) vorgesehen ist, wobei der Boden (30,31,32) der Schutzvorrichtung (13,18,21) wenigstens eine, in einem Winkel zum Boden des Druckmittelvorratsbehälters (1) geneigte Fläche aufweist und die Öffnung (17,20,23,26) zum Herausdringen von Luft in Richtung Druckmittelvorratsbehälter (1) zwischen der zylindrischen Wand (27,28,29) und dem Boden (30,31,32) der Schutzvorrichtung (13,18,21) vorgesehen ist.

3. Baugruppe nach Anspruch 2, **dadurch gekennzeichnet, dass** im Gehäuse (16,19) der Schutzvorrichtung (13,18) ein Gewebe (33,34) vorgesehen ist, welches ein Durchdringen von Luftblasen verhindert, wobei das Gehäuse (16,19) einen Bypass (35,36) aufweist, welcher ein Herausdringen von Luft aus dem Hauptzylinder (2) ermöglicht.

4. Baugruppe nach Anspruch 1 oder 2, **dadurch gekennzeichnet, dass** in der Wand (29) des Gehäuses (22) zusätzlich zu der Öffnung (23) ein Sieb (38) vorgesehen ist.

5. Baugruppe nach Anspruch 1 oder 2, **dadurch gekennzeichnet, dass** die zylindrische Wand (29) im Bereich der Öffnung (23) einen in Richtung Boden (14) gerichteten, schrägen Fortsatz (37) aufweist.

6. Baugruppe nach Anspruch 1, **dadurch gekennzeichnet, dass** das Gehäuse (25) der Schutzvorrichtung (24) im Wesentlichen topfförmig mit einer zylindrischen Wand (39) und einem Boden (40) vorgesehen ist, wobei im Gehäuse (25) ein Schwimmer (41) angeordnet ist, welcher beim Nachsaugen von Druckmittel aus dem Druckmittelvorratsbehälter (1) ein Ansaugen von Luftblasen verhindert und der ein Herausdringen von Luft aus dem Hauptzylinder (2) ermöglicht.

7. Baugruppe nach Anspruch 1, **dadurch gekennzeichnet, dass** im Behälterinnenraum (15) ein Metallschaum oder ein Metallschwamm (42) vorgesehen ist.

8. Baugruppe nach Anspruch 7, **dadurch gekennzeichnet, dass** der Metallschaum oder der Metallschwamm (42) im gesamten Behälterinnenraum (15) vorgesehen ist, wobei im Bereich eines Füllstutzens (45) ein Freiraum (46) zum Einführen einer Befüllvorrichtung vorgesehen ist.

9. Baugruppe nach Anspruch 7 oder 8, **dadurch gekennzeichnet, dass** der Metallschaum oder der Metallschwamm (42) im Bereich der Druckmittelverbindung (4) eine Entlüftungsöffnung (44) aufweist.

## Claims

1. Assembly comprising a pressure medium reservoir (1) and a manually actuable master cylinder (2), in particular for a hydraulic motorcycle brake system, wherein the pressure medium reservoir (1) is connected permanently to the master cylinder (2) by means of at least one pressure medium connection (4), wherein the master cylinder (2) has at least one pressure chamber (7), which can be connected to wheel brakes **and** a protection device (13, 18, 21, 24, 42) is arranged in the region of the pressure medium connection (4), said device preventing air from penetrating into the pressure chamber (7) and allowing air to escape in the direction of the pressure medium reservoir (1) **characterized in that** the protection device (13, 18, 21, 24) has a housing (16, 19, 22, 25) which extends around the pressure medium connection (4) from a bottom (14) of the pressure medium reservoir (1) into the reservoir interior (15), wherein at least one opening (17, 20, 23, 26) spaced apart from the bottom (14) is provided in the housing (16, 19, 22, 25) .

2. Assembly according to Claim 1, **characterized in that** the housing (16, 19, 22) of the protection device (13, 18, 21) is substantially pot-shaped with a cylindrical wall (27, 28, 29) and an end wall (30, 31, 32), wherein the end wall (30, 31, 32) of the protection device (13, 18, 21) has at least one surface sloping at an angle to the bottom of the pressure medium reservoir (1) and the opening (17, 20, 23, 26) for the escape of air in the direction of the pressure medium reservoir (1) is provided between the cylindrical wall (27, 28, 29) and the end wall (30, 31, 32) of the protection device (13, 18, 21).

3. Assembly according to Claim 2, **characterized in that** a cloth (33, 34), which prevents air bubbles from passing through, is provided in the housing (16, 19) of the protection device (13, 18), wherein the housing (16, 19) has a bypass (35, 36), which allows air to escape from the master cylinder (2).

4. Assembly according to Claim 1 or 2, **characterized in that** a screen (38) is provided in the wall (29) of the housing (22) in addition to the opening (23).

5. Assembly according to Claim 1 or 2, **characterized in that** the cylindrical wall (29) has an oblique extension (37) oriented in the direction of the bottom (14) in the region of the opening (23).

6. Assembly according to Claim 1, **characterized in that** the housing (25) of the protection device (24) is substantially pot-shaped and is provided with a cylindrical wall (39) and an end wall (40), wherein a float (41), which prevents air bubbles from being drawn in when additional pressure medium is drawn from the pressure medium reservoir (1) and which allows air to escape from the master cylinder (2), is arranged in the housing (25).

7. Assembly according to Claim 1, **characterized in that** a metal foam or a metal sponge (42) is provided in the reservoir interior (15).

8. Assembly according to Claim 7, **characterized in that** the metal foam or the metal sponge (42) is provided throughout the reservoir interior (15), wherein a free space (46) for the introduction of a filling device is provided in the region of a filler neck (45).

9. Assembly according to Claim 7 or 8, **characterized in that** the metal foam or the metal sponge (42) has a bleed opening (44) in the region of the pressure medium connection (4).

## Revendications

1. Ensemble comprenant un réservoir de fluide sous pression (1) et un maître-cylindre à actionnement manuel (2) et destiné en particulier à un système de freinage hydraulique de motocyclette, le réservoir de fluide sous pression (1) étant relié en permanence au maître-cylindre (2) par au moins une liaison à fluide sous pression (4), le maître-cylindre (2) comportant au moins une chambre de pression (7) qui peut être reliée à des freins de roue et un dispositif de protection (13, 18, 21, 24, 42) étant disposé au niveau de la liaison à fluide sous pression (4) et empêchant l'air de pénétrer dans la chambre de pression (7) et permettant à l'air de s'échapper en direction du réservoir de fluide sous pression (1), **caractérisé en ce que** le dispositif de protection (13, 18, 21, 24) comporte un boîtier (16, 19, 22, 25) qui s'étend autour de la liaison à fluide sous pression (4) depuis le fond (14) du réservoir de fluide sous pression (1) jusque dans l'espace intérieur (15) du récipient, au moins une ouverture (17, 20, 23, 26) espacée du fond (14) étant ménagée dans le boîtier (16, 19, 22, 25).

2. Ensemble selon la revendication 1, **caractérisé en ce que** le boîtier (16, 19, 22) du dispositif de protection (13, 18, 21) a sensiblement la forme d'un pot pourvu d'une paroi cylindrique (27, 28, 29) et d'un fond (30, 31, 32), le fond (30, 31, 32) du dispositif de protection (13, 18, 21) comportant au moins une surface qui est inclinée angulairement par rapport au fond du réservoir de fluide sous pression (1) et l'ouverture (17, 20, 23, 26) destinée à l'échappement de l'air en direction du réservoir de fluide sous pression (1) étant ménagée entre la paroi cylindrique (27, 28, 29) et le fond (30, 31, 32) du dispositif de protection (13, 18, 21).

3. Ensemble selon la revendication 2, **caractérisé en ce qu'**un tissu (33, 34) est prévu dans le boîtier (16, 19) du dispositif de protection (13, 18) et empêche les bulles d'air d'entrer, le boîtier (16, 19) comportant une dérivation (35, 36) qui permet à l'air de s'échapper du maître-cylindre (2).

4. Ensemble selon la revendication 1 ou 2, **caractérisé en ce qu'**un tamis (38) est prévu dans la paroi (29) du boîtier (22) en plus de l'ouverture (23).

5. Ensemble selon la revendication 1 ou 2, **caractérisé en ce que** la paroi cylindrique (29) comporte au niveau de l'ouverture (23) une extension oblique (37) dirigée vers le fond (14).

6. Ensemble selon la revendication 1, **caractérisé en ce que** le boîtier (25) du dispositif de protection (24) a sensiblement la forme d'un pot pourvu d'une paroi cylindrique (39) et d'un fond (40), un flotteur (41) étant disposé dans le boîtier (25) et empêchant les bulles d'air d'être aspirées lorsque le fluide sous pression est aspiré dans le réservoir de fluide sous pression (1) et permettant à l'air de s'échapper du maître-cylindre (2).

7. Ensemble selon la revendication 1, **caractérisé en ce qu'**une mousse métallique ou une éponge métallique (42) est prévue dans l'espace intérieur (15) du récipient.

8. Ensemble selon la revendication 7, **caractérisé en ce que** la mousse métallique ou l'éponge métallique (42) est prévue dans tout l'espace intérieur (15) du récipient, un espace libre (46) destiné à insérer un dispositif de remplissage étant prévu dans la région d'un goulot de remplissage (45).

9. Ensemble selon la revendication 7 ou 8, **caractérisé en ce que** la mousse métallique ou l'éponge métallique (42) comporte dans la région de la liaison à fluide sous pression (4) une ouverture de ventilation (44) .
